# EUROPEAN PATENT SPECIFICATION

(11) **EP 2 698 280 B1**
(45) Date of publication and mention of the grant of the patent: **19.08.2015**
(21) Application number: 12382326.2
(22) Date of filing: 14.08.2012
(51) Int. Cl.: B60R 1/074, B60R 1/076

(54) **Double detent folding mirror**
Faltspiegel mit Doppelarretierung
Miroir pliant à double détente

(43) Date of publication of application: 19.02.2014
(73) Proprietor: Fico Mirrors, S.A., 08028 Barcelona (ES)
(72) Inventor: Mendoza, Jose, E-08028 Barcelona (ES); Caballero Tapia, Moisés, E-08028 Barcelona (ES)
(74) Representative: ABG Patentes, S.L.

(56) References cited:
- EP-A1- 2 230 131
- EP-A2- 1 239 178
- DE-B3- 10 300 942
- US-A1- 2010 296 185

## Description

### OBJECT OF THE INVENTION

The present invention relates to a powered folding mirror, in particular suitable for vehicles, that has two lock positions: a folded position and an unfolded position locked according to the driving position.

When the mirror has been folded by means of the electrical motor, present invention allows to manually unfold it in such a way the mirror is locked in the same driving angular position as it was locked when unfolded by means of the electrical motor.

### PRIOR ART

DE 103 00 942 discloses a folding mirror with a base having a pivot extended along an axis that determines a lower end of the pivot located on the base and an upper end of the pivot located at the opposite end of the pivot, being this pivot around which rotates the mirror between two lock positions, the unfolded and the folded position, and wherein the pivot comprises a first axial guiding means, a spring extended along the axis surrounding the pivot wherein its upper end is axially fixed to the upper end of the pivot, a first ring extended along the axis surrounding the pivot and located under the spring which imposes a downward force to said first ring.

It is well known from the prior art power folding mirrors for vehicles allowing folding the mirror from a driving angular position to a parking angular position and also from the parking angular position to the driving angular position. In both positions, the folding mirror has a detent setting the correct angular position.

In these devices, when the folding mirror has been unfolded to the driving position by means of the electrical motor, it is possible to fold it manually exceeding the detent provided by the mirror.

The opposite situation is also possible. When the folding mirror has been folded to the parking position by means of the electrical motor, it is possible to unfold it manually but in this case the unfolded mirror is not locked in a driving position.

Present invention overcomes the drawbacks of the prior art providing a double detent wherein the folding mirror, when unfolded manually from the parking position reached by means of the electrical motor, to the driving position, has a detent in the driving position; the same angular position reached by the electrical motor.

### DESCRIPTION OF THE INVENTION

The present invention relates to a double detent folding mirror providing a first detent in the driving angular position of the mirror when unfolded by means of the electrical motor and a second detent in the same driving angular position of the mirror when unfolded manually.

Along the description the powered mirror is disclosed as powered by means of an electrical motor but this feature is not essential and it has to be interpreted that any motor, for instance pneumatic one, can be used versus manual action.

The powered mirror according to a first aspect of the invention comprises:
- *a base having a pivot extended along an axis X that determines a lower end of the pivot located on the base and an upper end of the pivot located at the apposite end of the pivot, being this pivot around which rotates the mirror between two lock posirions, the unfolded and the folded position, and wherein the pivot comprises a first axial guiding means.*

This base is the nonmoving reference of the system and is fixed to the vehicle. This base has a pivot oriented essentially upright which defines the axis of the rotational movement of the mirror. The other pieces are referenced with respect to this axis and this base.

The mirror has two lock positions which means that the mirror is retained in such position unless a certain force (a torque) reaches a threshold value. For instance, if the mirror is folded because it has been moved by means of the motor, then it can be unfolded manually applying a force greater than the detent force.

This pivot has axial guiding means used by some pieces of the device according to the invention in order to limit the movement of such pieces to an axial movement.
- *elastic means extended along the axis X surrounding the pivot wherein its upper end is axially fixed to the upper end of the pivot.*

This spring is an elastic mean adapted to exert an axial force to the pieces it rests on.

The upper part is axially fixed and the lower part is exerting the axial force.
- *a first ring extended along the axis X surrounding the pivot and located under the spring which imposes a downward force to said first ring wherein:*
   ∘ *the lower end of the spring rests on the first ring,*
   ∘ *the first ring is axially guided by means of the first axial guiding means of the pivot,*
   ∘ *the first ring comprises two concentric annular sectors, an internal annular sector and an external annular sector such that:*
      - *the internal annular sector is hollow and comprises a projection in whose bottom surface there is, centered, a housing resulting from two double-wedged projections,*
      - *theexternal annular sector comprises a second axial guiding means.*

The first ring is a ring with axial movement and pressed downwardly by means of the spring. This first ring is axially guided and it is not rotatable around the pivot because the motor impulses the mirror acting over the fixed base throughout this first ring.

If the first ring is observed in a projection according to the axial (X) direction, the two annular sectors are shown.

The internal annular sector is related to the interaction of the motor by means of a further piece with a flange that will be characterized below, that is, the internal annular sector is related to the powered movement. The interaction with the motor and the first detent of the mirror is obtained thanks to the centered housing resulting from the two double-wedged projections separated by such housing and the flange as it will be disclosed in the extended description of the invention.

The external annular sector is related to the interaction of the rotatable frame when moved manually, by means of a further ring that will also be characterized below.
- *a second ring extended along the axis X surrounding the pivot and located under the first ring axially guided with respect to the first ring by means of the second axial guiding means wherein the second ring comprises a second lower wedged abutment.*

This second ring is connected to the first ring in such a way it is axially movable with respect to the first ring. Because the first ring is axially guided with respect to the pivot and the second ring is axially guided with respect to the first ring then this second ring is also axially guided with respect to the pivot.

If the second ring is separated from the first ring the axial movements of the first and the second ring are independent; but, if they approach until contact then they move as a single package. For instance, the first ring can transfer the force of the spring to the second ring.

The second lower wedged abutment is the projection adapted to fit into a wedged cavity providing the second detent of the mirror.
- *a rotatable crown-wheel extended along the axis X surrounding the pivot comprising a flange in the upper part extended upwardly under the internal annular sector of the first ring and adapted to fit in the housing resulting from the double-wedged projections of the first ring in such a way that the first ring and the rotatable crownwheel are integral in rotation, the flange being also adapted to get out of or get into said housing when torque applied in one piece with respect to the other is beyond a predetermined threshold value of the torque.*

The rotatable crown-wheel is the piece transferring the torque from the driving gear or the motor to the base. The driving gear of the motor gears in the crown-wheel, directly or indirectly. If the rotatable crown-wheel is locked because its flange is housed in the housing resulting from the two double-wedged projections of the first ring then the rotatable crown-wheel does not rotate because it is locked by the first ring which is only axially movable. In this case the mirror can be rotated when the motor is folded or unfolded because the torque from the driving gear of the motor is transmitted to the base throughout the kinematic chain comprised of the crown-wheel, the flange of the crown-wheel, the first ring, the first guiding means and the pivot.

If the flange of the rotatable crown-wheel is not housed in the housing resulting from the double-wedged projections of the first ring then the flange can be freely moved within the hollow part of the internal annular sector of the first ring.
- *a rotatable frame having a housing extended along the axis X surrounding the pivot comprising:*
   ∘ *the support of the mirror,*
   ∘*a motor comprising a gear which drives the crown-wheel,*
   ∘ *an annular sector surface comprising at least a wedged cavity adapted to receive the second lower wedged abutment in such a way that the second ring and the rotatable frame are integral in rotation under a predetermined value of the torque wherein the second lower wedged abutment is adapted to get out of the wedged cavity by axial relative displacement beyond the predetermined threshold value and is also adapted to get in when rotated to the same angular position.*

The rotatable frame is the frame comprising the mirror with all the elements such as the devices for adjusting the orientation of the mirror and the motor. The motor is integral with the rotatable frame.

This rotatable frame also has an annular sector with at least a wedged cavity adapted to receive the second lower wedged abutment. If this abutment is housed in the wedged cavity then a second detent against the rotation is provided. When the torque between the rotatable frame and the second ring has a value beyond the predetermined threshold value then the abutment gets out of the wedged cavity and slips on the surface of the annular sector.

The technical problem is solved because *the angular position of the rotatable frame in the unfolded position predetermined by the flange of the rotatable crown-wheel housed in the housing resulting from the double-wedged projections of the first ring is the same angular position predetermined by the wedged abutment of the second ring housed in the wedged cavity of the annular sector of the rotatable frame.*

Under this condition, if the mirror is folded by means of the motor and then manually unfolded, the mirror is locked in the same driving angular position as if the mirror had been unfolded using the motor. Internally the components of the device according to this first aspect of the invention are not in the same position as if the detent of the mirror locked in the driving position is reached unfolding the mirror using the motor. However, when the motor is actuated the device is reset and it can be power operated again.

### DESCRIPTION OF THE DRAWINGS

The invention will be now described more in detail with reference to the accompanying drawings given by way of illustrative and non limiting example, wherein:
- Figures 1, 2, 3: These three figures show the rotating part where the most important pieces are according to an embodiment of the invention wherein external pieces are eliminated in order to show all the internal components.
- Figures 4, 5: In these figures the rotating part of the same embodiment are shown in unfolded and folded position when the mirror is powered by means of the motor.
- Figures 6, 7: In these figures the rotating part of the same embodiment are shown when the mirror is manually unfolded from the parking angular position.
- Figures 8, 9, 10: These three figures show the reset of the same embodiment when the mirror has been unfolded as it is disclosed according to figures 6 and 7.
- Figure 11: This figure is a top view of the rotating part wherein the spring, the first and the second ring have been removed in order to show the annular sector of the rotatable frame comprising wedged cavities.
- Figure 12: This figure is the same view as shown in figure 11 with the first and the second rings showing that the first ring engages in longitudinal slots of the pivot as axial guiding means and it also shows the internal and external annular sectors of the first ring.
- Figure 13: This figure is a perspective view showing how the second lower wedged abutment is adapted to get into the wedged cavity of the annular sector of the rotatable frame.
- Figure 14: This figure is a perspective view showing the particular shape of the first ring in this embodiment wherein the pivot, the second ring and the spring has been eliminated in the graphical representation.
- Figure 15: This figure is a section of a perspective view similar to the perspective view of figure 13 wherein this section allows having visual access to the annular sector surface comprising wedged cavities as an integral part of the rotatable frame for the retention of a ring by means of a wedged abutment, the ring that will be identified as second ring. This retention is overcome when the user manually folds the mirror.

### DATAILED DESCRIPTION OF THE INVENTION

The present invention according to a first aspect of the invention is a powered folding mirror having a double detent, a first detent if the mirror is operated using the internal motor allowing locking the mirror in the driving angular position and a second detent, in the same driving angular position that is obtained when the mirror is unfolded manually from the parking position.

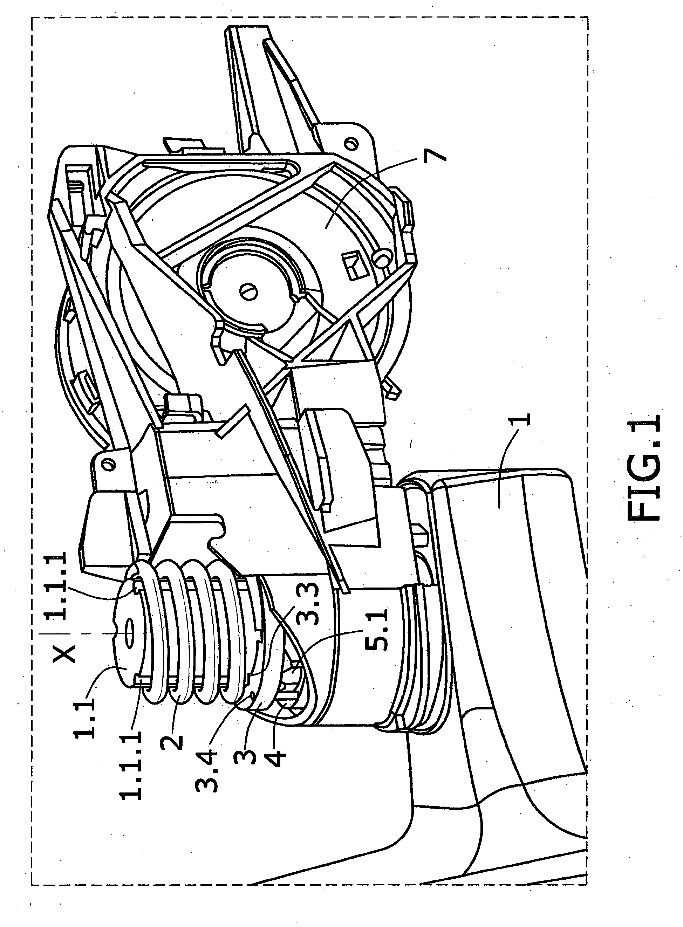

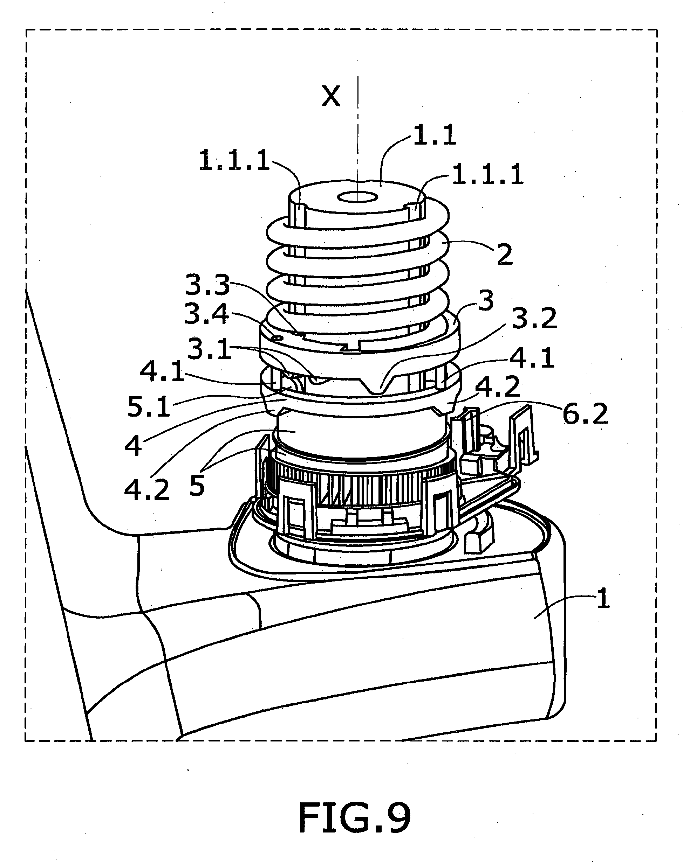

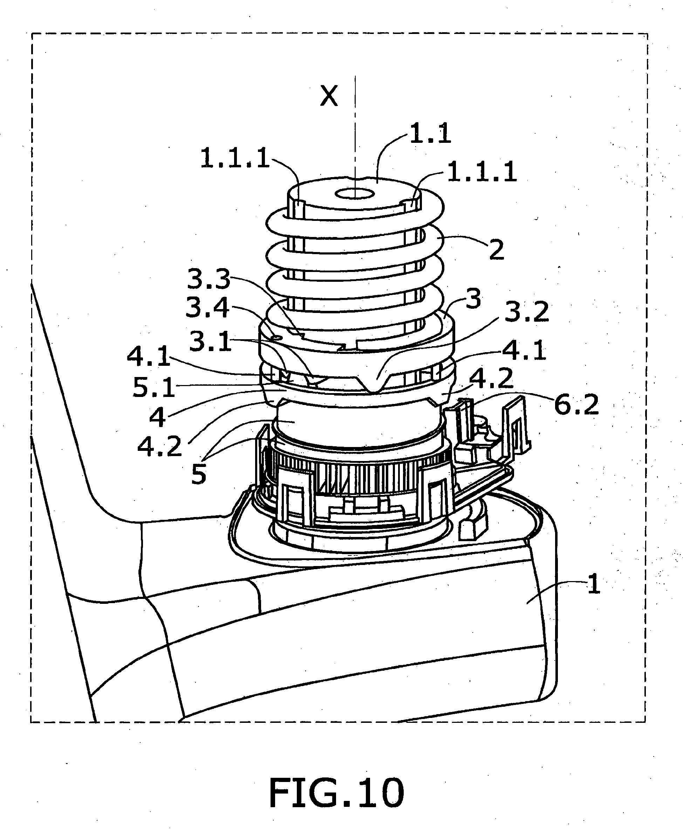

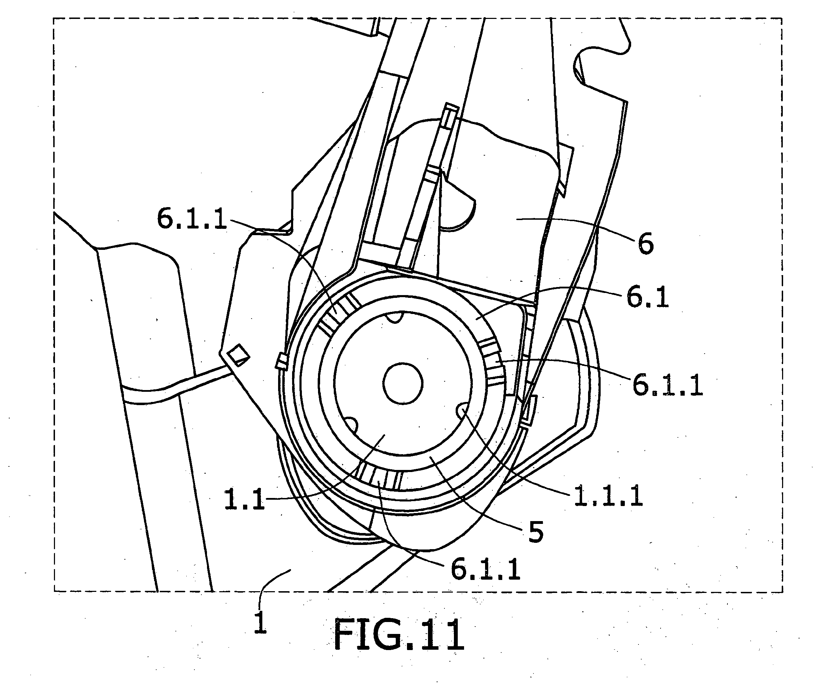

The detailed description of the invention will be disclosed using the embodiment shown in figures 1-14.

Figure 1 shows the mirror when the case is not present in order to have visual access to the internal components of the mirror. According to the orientation of the drawing, in the left hand side of the figure there is a base (1) projecting from one side of the vehicle for supporting the folding mirror.

On the base (1) there is an upright pivot (1.1) having three vertical grooves on the lateral surface of said pivot (1.1) which are used as guiding means (1.1.1) for a first ring (3). The first ring (3) has an internal radial abutment (3) per groove adapted to slide along the groove (1.1.1) limiting said first ring (3) to an axial displacement.

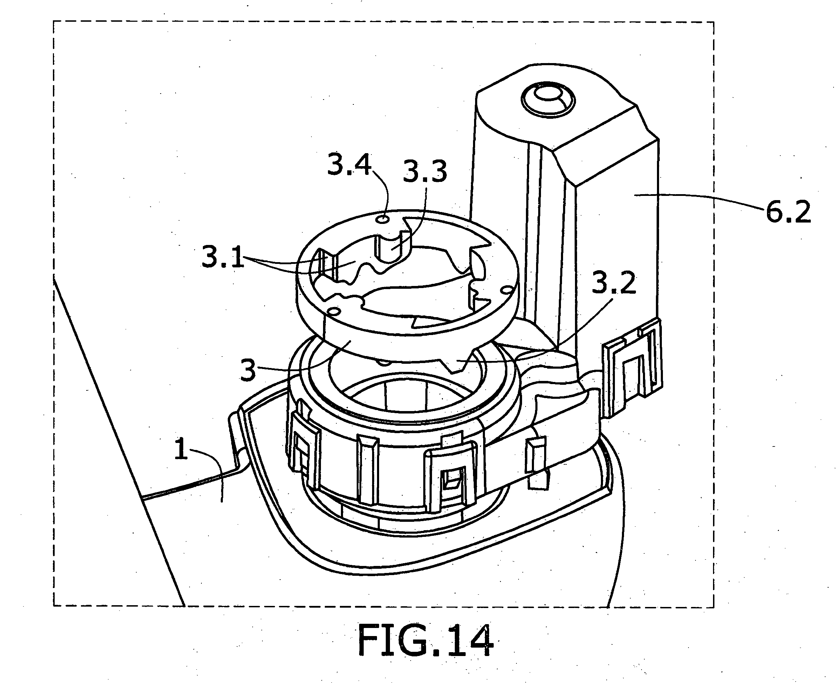

There is a spring (2) resting on the first ring (3) pressing it downwards. This spring (2) rests at the top on a piece which is not graphically represented. Figure 14 shows clearly the first ring (3) because the pivot (1.1) and other pieces surrounding the first ring (3) have been eliminated in the figure in order to have visual access to the internal part of said first ring (3).

This first ring (3) has two concentric annular sectors, an internal annular sector which is hollow and comprises in this embodiment three projections in whose bottom surface there is, centered, a housing resulting from two double-wedged projections (3.1); and an external annular sector that, in this embodiment, has three holes (3.4).

The housing resulting from the two double-wedged projections (3.1) is adapted to house a flange (5.1) located in the upper part of a rotatable crown-wheel (5), extended upwardly under the internal annular sector of the first ring (3). The rotatable crown-wheel (5) is also extended along the axis (X) surrounding the pivot (1.1).

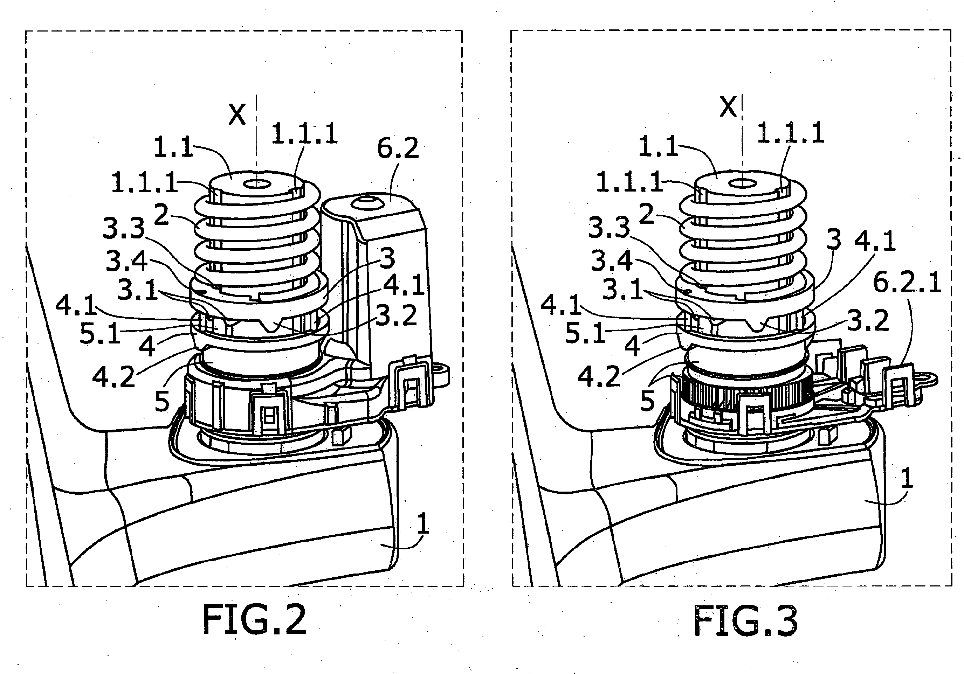

In this embodiment, as it is shown in figures 2 and 3 where the rotatable frame (6) and the case of the motor (6.2) have been respectively eliminated in order to have visual access to the internal part of the device, the rotatable crown-wheel (5) is adapted to engage with the pinion gear (not shown) of the motor (6.2).

According to this kinematic chain, the rotatable crown-wheel (5) is rotationally integral with the base (1) because its flange (5.1) is housed in the housing resulting from the two double-wedged projections (3.1) of the first ring (3) which cannot rotate. When the motor (6.2) is energized, its pinion gear drives the rotation of the support of the motor (6.2) and therefore the rotatable frame (6) while the rotatable crown-wheel (5) and the first ring (3) is rotationally integral with the pivot (1.1) which is fixed onto the base (1).

Because the axial force of the spring (2) over the first ring (3), the first ring (3) is rotationally integral with the crown-wheel (5) unless the torque between the rotatable crown-wheel (5) and the first ring (3) reaches a predetermined value according to the force of the spring (2) as it will be disclosed below.

Figures 2 and 3 also show a second ring (4) extended along the same axis (X) surrounding the pivot (1.1) and located under the first ring (3) axially guided with respect to the first ring (3) by means of second axial guiding means (3.4, 4.1). These second guiding means are three stems (4.1) located over the second ring (4), which enter into three corresponding holes (3.4) of the second ring (3). The first ring (3) has a first lower abutment (3.2) defining the minimum distance between the first ring (3) and the second ring (4).

This second ring (4) comprises at least a second lower wedged abutment (4.2), three in this embodiment, adapted to be housed in a wedged cavity (6.1.1) located over an annular sector surface (6.1) of the portion of the rotatable frame (6) which is surrounding the second ring (4).

When the motor (6.2) is energized as it has been disclosed, since the second ring (4) can move freely in the axial direction, the rotatable frame (6) rotates forcing the second ring (4) to rise because the wedged shape of cavities (6.1.1).

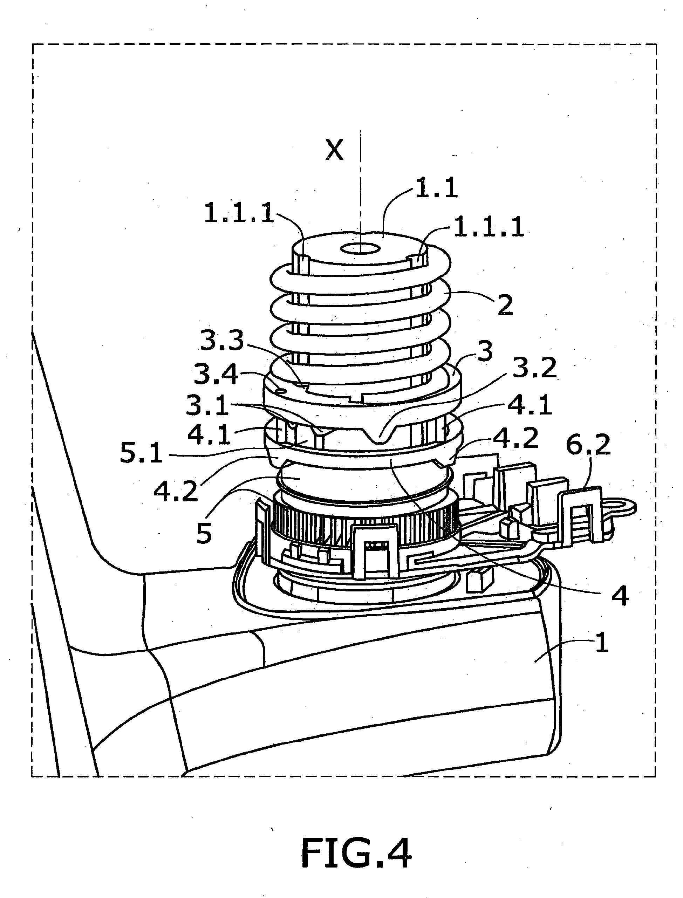

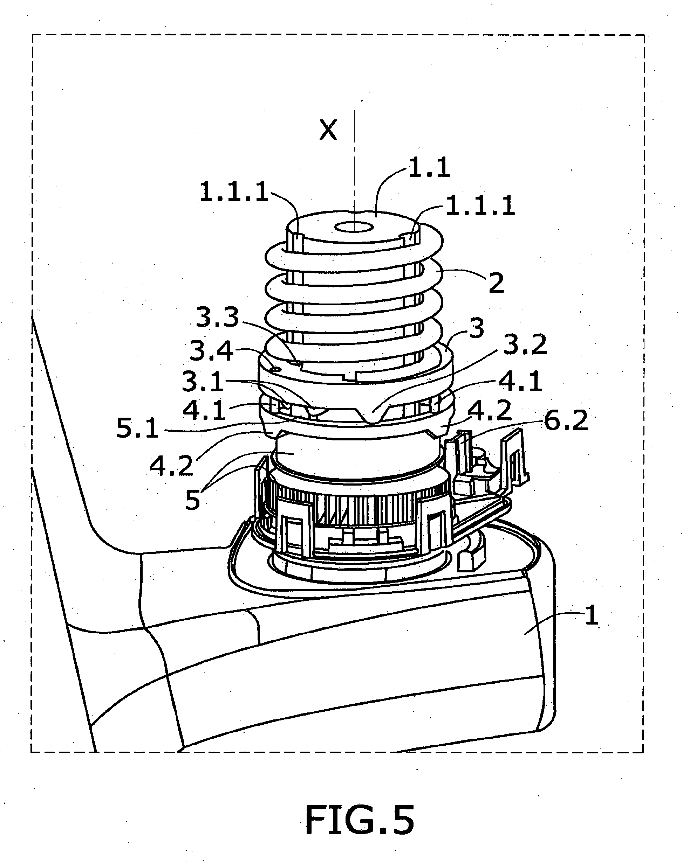

Figure 4 shows the support of the motor (6.2) according to the unfolded position and the flange (5.1) of the rotatable crown-wheel (5) housed in the housing resulting from the two double-wedged projections (3.1) of the first ring (3). Figure 5 shows the final angular position of the support of the motor (6.2) when the motor (6.2) has been energized which is also the final angular position of the rotatable frame (6) not shown in order to have visual access to the two internal rings (3, 4).

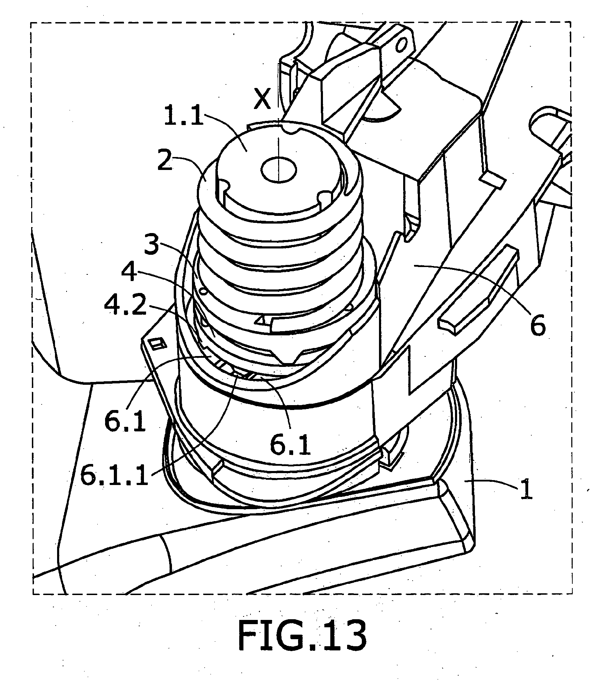

Figure 13 shows the same position as figure 5 but in this figure the rotatable frame (6) is represented. In this figure 13 the top view allows having visual access to the annular sector surface (6.1) with the wedged cavity (6.1.1) because due to the rotation of the rotatable frame (6) the second lower wedged abutment (4.2) of the second ring (4) has gone out of the wedged cavity (6.1.1). The wedged shape of the cavity (6.1.1) and the wedged shape of the second lower wedged abutment (4.2) of the second ring (4) raise the second ring (4) until said second lower wedged abutment (4.2) reaches the upper surface of the annular sector surface (6.1).

Comparing figure 4 and figure 5, it is shown that the second ring (4), before the rotation, is spaced from the first ring (3) and, after the rotation the second ring (4) has risen until contacting with the first lower abutment (3.2) of the first ring (3).

If the motor (6.2) is used to unfold again the folding mirror then the position shown in figure 4 would be reached because the rotatable crown-wheel (5) would keep being a fixed piece and the second lower wedged abutment (4.2) of the second ring (4) would come back to the wedged cavity (6.1.1) of the annular sector surface (6.1) of the rotatable frame (6) descending the second ring (4).

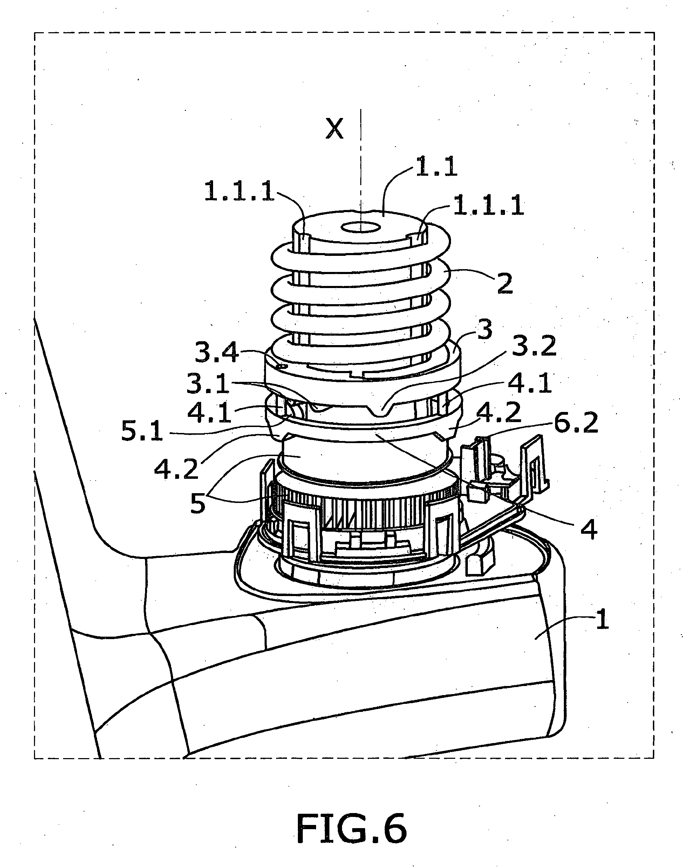

The final angular position of the folding mirror shown in figure 5 is the position reached after a powered movement. Figures 6, 7 and 8 are a sequence of angular positions when the user unfolds the mirror manually.

As shown in figure 6, the user unfolds the mirror exerting a force over the rotatable frame (6) and; therefore, over the rotatable crown-wheel (5) because motor and the rotatable crown-wheel (5) are rotationally integral since the motor has not been energized.

The shape of the housing resulting from the two double-wedged projections (3.1), the shape of the flange (5.1) and the spring (2) determines the maximum torque between the first ring (3) and the rotatable crown-wheel (5) before the flange (5.1) comes out of the housing. When the force exceeds the maximum torque the housing cannot hold the flange (5.1) raising the first ring (3) and compressing the spring (2).

As shown in figure 6, the rotatable crown-wheel (5), the motor (6.2) and the rotatable frame (6) integrally rotate. As a result, the first ring is elevated allowing the flange (5.1) to come out of the housing. In figure 6, this flange is partially hidden by the stem (4.1) of the second ring (4).

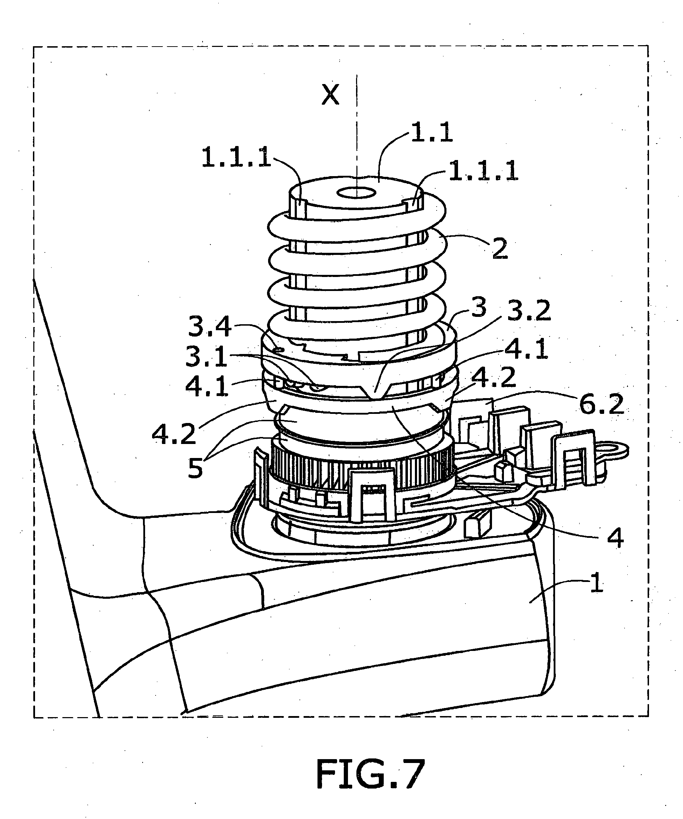

Figure 7 is the final angular position wherein:
- the flange (5.1) of the rotatable crown-wheel is out of its housing,
- the first ring (3) descends again until the first lower abutment (3.2) of this first ring (3) rests on the upper part of the second ring (4); and,
- the second lower wedged abutment (4.2) enters into the wedged cavity (6.1.1) of the annular sector surface (6.1) of the rotatable frame (6).

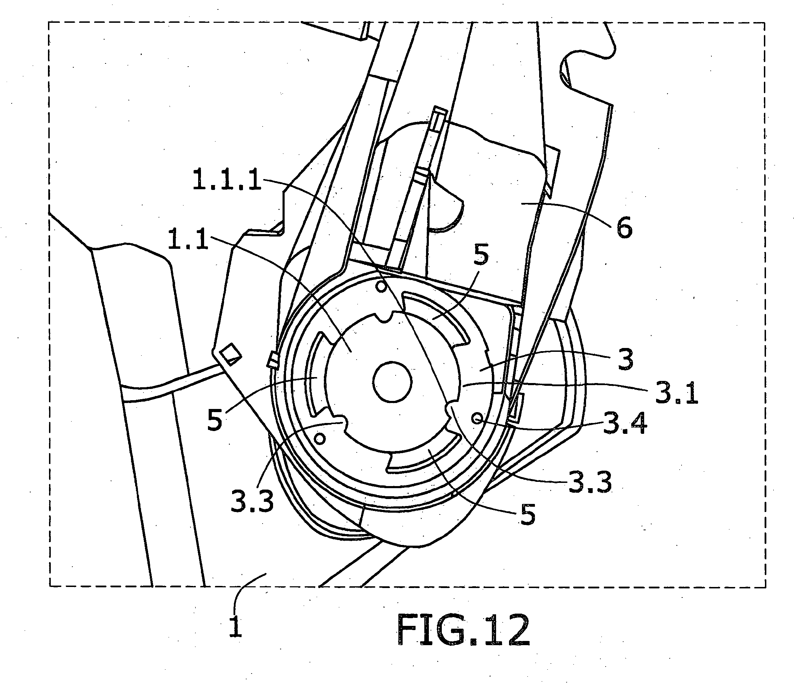

As shown in figure 12 and 14, in the internal annular sector of the first ring (3) between two housings resulting from the two double-wedged projections (3.1) there is no axial support of the flange (5.1); therefore, the axial force of the spring (2) over the first ring (3) is transmitted to the second ring (4) by means of the first lower abutment (3.2) of the first ring (3) which rests on the upper part of the second ring (4). This axial force avoids a free axial displacement of the second ring (4) as observed when the angular motion was only due to the motor as disclosed in figures 4 and 5. In this case, the second lower wedged abutment (4.2) enters into the wedged cavity (6.1.1) due to the force exerted by the spring (2), providing the second detent of the device.

The angular position given by this second detent is in the same angular position as the one given by the first detent, provided when the folding/unfolding movement is driven by the motor.

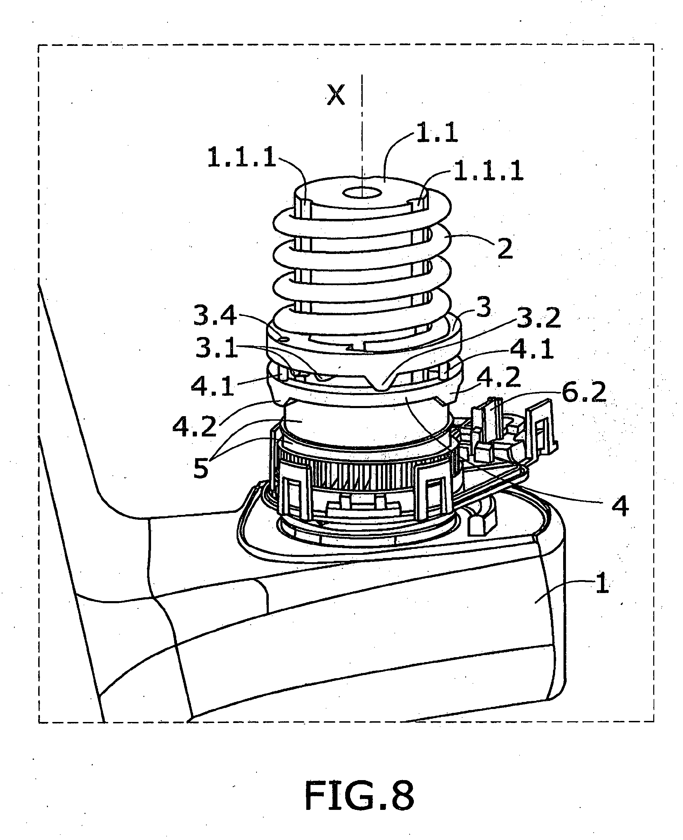

After the manual unfolding, the flange (5.1) is not housed in the housing resulting from the two double-wedged projections (3.1) of the first ring (3). Figures 8, 9 and 10 show the sequence of the reset of the device that takes place when the motor is energized, wherein the flange (5.1) recovers its position coming back to the housing resulting from the two double-wedged projections (3.1) of the first ring (3).

During the reset, even if the motor (6.2) is energized, the pinion gear moves the rotatable crown-wheel (5) until the flange (5.1) is housed in its housing but the rotatable frame (6) does not show any rotational movement. When the flange (5.1) is already housed in the housing resulting from the two double-wedged projections (3.1) of the first ring (3) then the motor (6.2) is able to move the rotatable frame (6) as disclosed in figures 4 and 5.

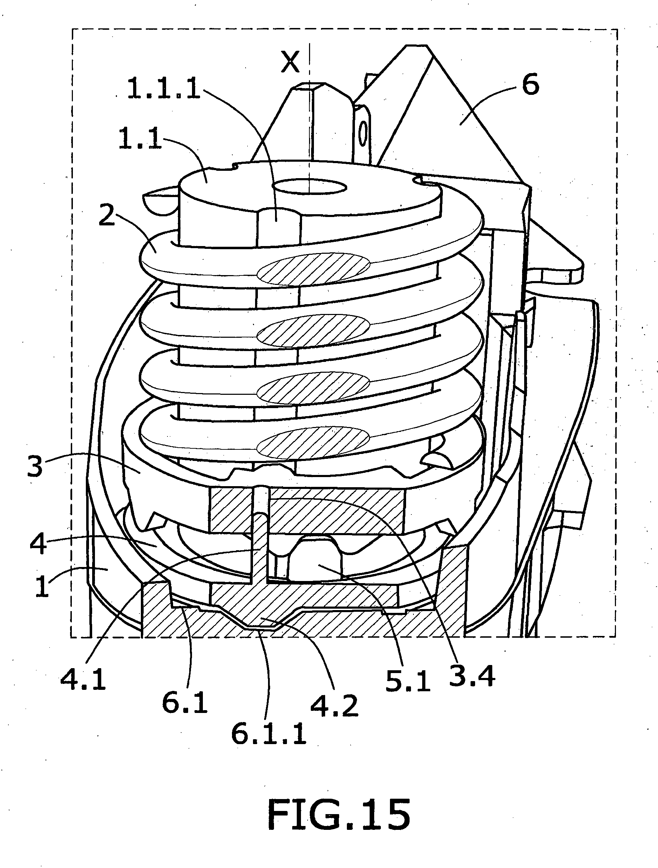

In figure 15 the rotatable frame (6) has been sectioned providing visual access to the internal part of the device such that the annular sector surface (6.1) is shown as an integral part of the rotatable frame (6). This annular sector surface (6.1) is extended inwardly around the package comprised by the set of rings (3, 4) providing a surface with wedged cavities (6.1.1), at least one wedged cavity (6.1.1) per wedged abutment (4.2) of the second ring (4), where the wedged abutment/abutments (4.2) rest/s.

The cooperation between each wedged abutment (4.2) and the corresponding wedged cavity (6.1.1) where the abutment is housed provides the retention of the mirror through the second ring (4). This retention is overcome when the user manually folds the mirror because each wedged abutment (4.2) comes out of its wedge cavity (6.1.1) against the force provided by the spring (2). In an embodiment, the set of pairs abutment (4.2)/cavity (6.1.1) is equally distributed.
The particular orientation of the mirror shown in figure 15 allows showing the abutment (4.2) located inside of its wedge cavity (6.1.1).Once the abutment (4.2) has come out of its wedge cavity (6.1.1) is able to slide over the annular sector surface (6.1) pressed by the force provided by the spring (2). When the wedge abutment (4.2) founds again a wedged cavity (6.1.1), it shows a tendency to be housed because of the wedge shape and of the force of the spring (2) providing a detent to the mirror when folded manually.

## Claims

1. Double detent folding mirror comprising:
• a base (1) having a pivot (1.1) extended along an axis (X) that determines a lower end of the pivot (1.1) located on the base (1) and an upper end of the pivot (1.1) located at the opposite end of the pivot (1.1), being this pivot (1.1) around which rotates the mirror between two lock positions, the unfolded and the folded position, and wherein the pivot (1.1) comprises a first axial guiding means (1.1.1),
• a spring (2) extended along the axis (X) surrounding the pivot (1.1) wherein its upper end is axially fixed to the upper end of the pivot (1.1),
• a first ring (3) extended along the axis (X) surrounding the pivot (1.1) and located under the spring (2) which imposes a downward force to said first ring (3) wherein:
o the lower end of the spring (2) is resting on the first ring (3),
o the first ring (3) is axially guided by means of the first axial guiding means (1.1.1) of the pivot (1.1),
o the first ring (3) comprises two concentric annular sectors, an internal annular sector and an external annular sector such that:
- the internal annular sector is hollow and comprises a projection in whose bottom surface there is, centered, a housing resulting from two double-wedged projections (3.1),
- the external annular sector comprises a second axial guiding means (3.4, 4.1),
• a second ring (4) extended along the axis (X) surrounding the pivot (1.1) and located under the first ring (3) axially guided with respect to the first ring (3) by means of the second axial guiding means (3.4, 4.1) wherein the second ring (4) comprises a second lower wedged abutment (4.2),
• a rotatable crown-wheel (5) extended along the axis (X) surrounding the pivot (1.1) comprising a flange (5.1) in the upper part extended upwardly under the internal annular sector of the first ring (3) and adapted to fit in the housing resulting from the double-wedged projections (3.1) of the first ring (3) in such a way that the first ring (3) and the rotatable crown-wheel (5) are integral in rotation, the flange (5.1) being also adapted to get out of or get into said housing when torque applied in one piece with respect to the other is beyond a predetermined threshold value of the torque,
• a rotatable frame (6) having a housing extended along the axis (X) surrounding the pivot (1.1) comprising:
o the support of the mirror,
o a motor (6.2) comprising a gear driving the crown-wheel (5),
o an annular sector surface (6.1) comprising a wedged cavity (6.1.1) adapted to receive the second lower wedged abutment (4.2) in such a way that the second ring (4) and the rotatable frame (6) are integral in rotation under a predetermined value of the torque wherein the second lower wedged abutment (4.2) is adapted to get out of the wedged cavity (6.1.1) by axial relative displacement beyond the predetermined threshold value and is also adapted to get in when rotated to the same angular position,
wherein the angular position of the rotatable frame (6) in the unfolded position predetermined by the flange (5.1) of the rotatable crown-wheel (5) housed in the housing resulting from the double-wedged projections (3.1) of the first ring (3) is the same angular position predetermined by the second lower wedged abutment (4.2) of the second ring (4) housed in the wedged cavity (6.1.1) of the annular sector (6.1) of the rotatable frame (6).

2. A mirror according to claim 1 wherein the pivot (1.1) comprises a groove (1.1.1) in its surface parallel to the longitudinal direction and the first ring (3) comprises an internal radial abutment (3.3) adapted to fit the groove (1.1.1) as first axial guiding means (1.1.1).

3. A mirror according to claim 1 or 2 wherein the first ring (3) comprises a hole (3.4), the second ring (4) comprises a stem (4.1) adapted to be housed in the hole (3.4) as second axial guiding means (3.4, 4.1) or, being the hole in the second ring (4) and the stem (4.1) in the first ring (3).

4. A mirror according to any previous claim wherein the first ring (3) comprises on its lower surface a first lower wedged abutment (3.2) adapted to limit the proximity between the first ring (3) and the second ring (4).

5. A mirror according to any previous claim wherein the annular sector surface (6.1) comprising a wedged cavity (6.1.1) is an integral part of the rotatable frame (6).

## Patentansprüche

1. Faltspiegel mit Doppelarretierung umfassend:
• eine Basis (1) mit einem Drehgelenk (1.1), das sich entlang einer Achse (X) erstreckt, die ein unteres Ende des Drehgelenks (1.1), das auf der Basis (1) angeordnet ist, und ein oberes Ende des Drehgelenks (1.1), das am gegenüberliegenden Ende des Drehgelenks (1.1) angeordnet ist, bestimmt, wobei das Drehgelenk (1.1) ist, um welches sich der Spiegel zwischen zwei Arretierpositionen, der entfalteten und der gefalteten Position, dreht, und wobei das Drehgelenk (1.1) ein erstes axiales Führungsmittel (1.1.1) umfasst,
• eine Feder (2), die sich entlang der Achse (X) erstreckt und das Drehgelenk (1.1) umgibt, wobei ihr oberes Ende am oberen Ende des Drehgelenks (1.1) axial fixiert ist,
• einen ersten sich entlang der Achse (X) erstreckenden Ring (3), der das Drehgelenk (1.1) umgibt und unter der Feder (2), die auf den ersten Ring (3) eine nach unten gerichtete Kraft ausübt, angeordnet ist wobei:
o das untere Ende der Feder (2) auf dem ersten Ring (3) ruht,
o der erste Ring (3) mittels des ersten axialen Führungsmittels (1.1.1) des Drehgelenks (1.1) axial geführt wird,
o der erste Ring (3) zwei konzentrische ringförmige Sektoren, einen inneren ringförmigen Sektor und einen äußeren ringförmigen Sektor, umfasst, derart, dass:
- der innere ringförmige Sektor hohl ist und einen Vorsprung umfasst, in dessen Bodenfläche, zentriert, ein aus zwei Doppelkeilvorsprüngen (3.1) resultierendes Gehäuse vorhanden ist,
- der äußere ringförmige Sektor ein zweites axiales Führungsmittel (3.4, 4.1) umfasst,
• einen zweiten sich entlang der Achse (X) erstreckenden Ring (4), der das Drehgelenk (1.1) umgibt und unter dem ersten Ring (3) axial geführt bezüglich des ersten Rings (3) mittels des zweiten axialen Führungsmittels (3.4, 4.1) angeordnet ist, wobei der zweite Ring (4) ein zweites unteres keilförmiges Widerlager (4.2) umfasst,
• ein drehbares sich entlang der Achse (X) erstreckendes Kronrad (5), das das Drehgelenk (1.1) umgibt, umfassend einen Flansch (5.1) im oberen Teil, der sich nach oben unter dem inneren ringförmigen Sektor des ersten Rings (3) erstreckt und ausgelegt ist, um in das aus den Doppelkeil-Vorsprüngen (3.1) des erstes Rings (3) resultierende Gehäuse zu passen, derart, dass der erste Ring (3) und das drehbare Kronrad (5) in der Rotation einheitlich sind, wobei der Flansch (5.1) ebenfalls so ausgelegt ist, um in das Gehäuse ein- und auszufahren, wenn das auf ein Teil bezüglich des anderen Teils angewandte Drehmoment über einem vorbestimmten Schwellwert des Drehmoments liegt,
• einen drehbaren Rahmen (6) mit einem sich entlang der Achse (X) erstreckenden Gehäuse, der das Drehgelenk (1.1) umgibt, umfassend:
o den Träger des Spiegels,
o einen Motor (6.2) umfassend ein Getriebe, das das Kronrad (5) antreibt,
o eine ringförmige Sektorfläche (6.1) umfassend eine keilförmige Aushöhlung (6.1.1), die dazu ausgelegt ist, das zweite untere keilförmige Widerlager (4.2) so aufzunehmen, dass der zweite Ring (4) und der drehbare Rahmen (6) in der Rotation unter einem vorbestimmten Wert des Drehmoments einheitlich sind, wobei das zweite untere keilförmige Widerlager (4.2) dazu ausgelegt ist, aus der keilförmigen Aushöhlung (6.1.1) durch relative axiale Verschiebung über den vorbestimmten Schwellwert hinaus auszufahren und ebenso dazu ausgelegt ist, bei Drehung in die gleiche Winkelposition einzufahren,
wobei die Winkelposition des drehbaren Rahmens (6) in der entfalteten Position, die durch den Flansch (5.1) des drehbaren Kronrads (5) vorbestimmt ist, das in dem aus den Doppelkeilvorsprüngen (3.1) des ersten Rings (3) resultierenden Gehäuse beherbergt ist, die gleiche Winkelposition ist, die durch das zweite untere keilförmige Widerlager (4.2) des zweiten Rings (4) vorbestimmt ist, das in der keilförmigen Aushöhlung (6.1.1) des ringförmigen Sektors (6.1) des drehbaren Rahmens (6) aufgenommen ist.

2. Spiegel nach Anspruch 1, wobei das Drehgelenk (1.1) eine Nut (1.1.1) in seiner Oberfläche parallel zur Längsrichtung umfasst und der erste Ring (3) ein inneres radiales Widerlager (3.3) umfasst, das dazu ausgelegt ist, als erstes axiales Führungsmittel (1.1.1) in die Nut (1.1.1) zu passen.

3. Spiegel nach Anspruch 1 oder 2 wobei der erste Ring (3) ein Loch (3.4) umfasst, der zweite Ring (4) einen Holm (4.1) umfasst, der dazu ausgelegt ist, als zweites axiales Führungsmittel (3.4, 4.1) in dem Loch (3.4) aufgenommen zu werden, oder das Loch in dem zweiten Ring (4) und der Holm (4.1) in dem ersten Ring (3) ist.

4. Spiegel nach einem vorangegangenen Anspruch, wobei der erste Ring (3) auf seiner unteren Fläche ein erstes unteres keilförmiges Widerlager (3.2) umfasst, das dazu ausgelegt ist, die Nähe zwischen dem ersten Ring (3) und dem zweiten Ring (4) zu begrenzen.

5. Spiegel nach einem vorangegangenen Anspruch wobei die ringförmige Sektorfläche (6.1), die eine keilförmige Aushöhlung (6.1.1) umfasst, ein integraler Teil des drehbaren Rahmens (6) ist.

## Revendications

1. Miroir pliant à double détente comprenant :
une base (1) ayant un pivot (1.1) étendu le long d'un axe (X) qui détermine une extrémité inférieure du pivot (1.1) positionnée sur la base (1) et une extrémité supérieure du pivot (1.1) positionnée au niveau de l'extrémité opposée du pivot (1.1), ce pivot (1.1) étant celui autour duquel tourne le miroir entre deux positions de verrouillage, la position dépliée et la position pliée, et dans lequel le pivot (1.1) comprend un premier moyen de guidage axial (1.1.1),
un ressort (2) étendu le long de l'axe (X) entourant le pivot (1.1), dans lequel son extrémité supérieure est fixée de manière axiale à l'extrémité supérieure du pivot (1.1),
une première bague (3) étendue le long de l'axe (X) entourant le pivot (1.1) et positionnée sous le ressort (2) qui impose une force descendante sur ladite première bague (3), dans lequel :
l'extrémité inférieure du ressort (2) s'appuie sur la première bague (3),
la première bague (3) est axialement guidée au moyen du premier moyen de guidage axial (1.1.1) du pivot (1.1),
la première bague (3) comprend deux secteurs annulaires concentriques, un secteur annulaire interne et un secteur annulaire externe, de sorte que :
le secteur annulaire interne est creux et comprend une saillie dans la surface inférieure de laquelle, on trouve, centré, un logement provenant de deux saillies à clavette double (3.1),
le secteur annulaire externe comprend un second moyen de guidage axial (3.4, 4.1),
une seconde bague (4) étendue le long de l'axe (X) entourant le pivot (1.1) et positionnée sous la première bague (3) axialement guidée par rapport à la première bague (3) au moyen du second moyen de guidage axial (3.4, 4.1), dans lequel la seconde bague (4) comprend une seconde butée à clavette inférieure (4.2),
une roue plate rotative (5) étendue le long de l'axe (X) entourant le pivot (1.1) comprenant une bride (5.1) dans la partie supérieure étendue vers le haut sous le secteur annulaire interne de la première bague (3) et adaptée pour se monter dans le logement provenant des saillies à double clavette (3.1) de la première bague (3) de sorte que la première bague (3) et la roue plate rotative (5) sont solidaires en rotation, la bride (5.1) étant également adaptée pour sortir ou entrer dans ledit logement lorsque le couple appliqué sur une pièce par rapport à l'autre est au-delà d'une valeur de seuil prédéterminée du couple,
un bâti rotatif (6) ayant un logement étendu le long de l'axe (X) entourant le pivot (1.1) comprenant :
le support du miroir,
un moteur (6.2) comprenant un engrenage entraînant la roue plate (5),
une surface de secteur annulaire (6.1) comprenant une cavité à clavette (6.1.1) adaptée pour recevoir la seconde butée à clavette inférieure (4.2) de sorte que la seconde bague (4) et le bâti rotatif (6) sont solidaires en rotation sous une valeur prédéterminée du couple, dans lequel la seconde butée à clavette inférieure (4.2) est adaptée pour sortir de la cavité à clavette (6.1.1) par le déplacement axial relatif au-delà de la valeur de seuil prédéterminée et est également adaptée pour y entrer lorsqu'elle tourne dans la même position angulaire,
dans lequel la position angulaire du bâti rotatif (6) dans la position dépliée prédéterminée par la bride (5.1) de la roue plate rotative (5) logée dans le logement provenant des saillies à double clavette (3.1) de la première bague (3) est la même position angulaire prédéterminée par la seconde butée à clavette inférieure (4.2) de la seconde bague (4) logée dans la cavité à clavette (6.1.1) du secteur annulaire (6.1) du bâti rotatif (6).

2. Miroir selon la revendication 1, dans lequel le pivot (1.1) comprend une rainure (1.1.1) dans sa surface parallèle à la direction longitudinale et la première bague (3) comprend une butée radiale interne (3.3) adaptée pour monter la rainure (1.1.1) en tant que premier moyen de guidage axial (1.1.1).

3. Miroir selon la revendication 1 ou 2, dans lequel la première bague (3) comprend un trou (3.4), la seconde bague (4) comprend une tige (4.1) adaptée pour être logée dans le trou (3.4) en tant que second moyen de guidage axial (3.4, 4.1) ou être le trou dans la seconde bague (4) et la tige (4.1) dans la première bague (3).

4. Miroir selon l'une quelconque des revendications précédentes, dans lequel la première bague (3) comprend, sur sa surface inférieure, une première butée à clavette inférieure (3.2) adaptée pour limiter la proximité entre la première bague (3) et la seconde bague (4).

5. Miroir selon l'une quelconque des revendications précédentes, dans lequel la surface de secteur annulaire (6.1) comprenant une cavité à clavette (6.1.1) fait partie intégrante du bâti rotatif (6).
